# EUROPÄISCHE PATENTANMELDUNG

(11) **EP 4 531 179 A1**
(43) Veröffentlichungstag der Anmeldung: **02.04.2025**
(21) Anmeldenummer: 23200300.4
(22) Anmeldetag: 28.09.2023
(51) Int. Cl.: H01M 50/209, H01M 50/224, H01M 50/227, H01M 50/229, H01M 50/231, H01M 50/249, H01M 50/258

(54) **BATTERIETRÄGERBAUTEIL, BATTERIETRÄGER SOWIE VERFAHREN ZUR HERSTELLUNG EINES BATTERIETRÄGERBAUTEILS SOWIE EINES BATTERIETRÄGERS**

(71) Anmelder: Nemak, S.A.B. de C.V., 66017 García, Nuevo León (MX)
(72) Erfinder: MÜLLER, Andreas, 645428 Rüsselsheim (DE); FLECK, Thomas, 51107 Köln (DE); RAKOTOMAHEFA, Manitra, 75180 Pforzheim (DE); VELEZ, Javier, 5704 Helmond (NL)
(74) Vertreter: Cohausz & Florack

(57) **Zusammenfassung**

Die Erfindung betrifft ein Batterieträgerbauteil, insbesondere Batterieträgerrahmen, zur zumindest teilweisen Anordnung in einem Batterieträger (2) und/oder zur Anbindung an einen Batterieträger (2), umfassend: zumindest ein Kernelement (18), wobei das zumindest eine Kernelement (18) ein Metall und/oder Fasermaterial umfasst, insbesondere aus einem Metall und/oder aus einem Fasermaterial besteht, und zumindest ein das Kernelement (18) zumindest teilweise umgebendes Mantelelement (20), wobei das zumindest eine Mantelelement (20) Kunststoff umfasst, insbesondere aus Kunststoff besteht. Die Erfindung betrifft ferner einen Batterieträger zur Aufnahme zumindest eines als Antriebsenergiespeicher für ein elektrisch angetriebenes Fahrzeug dienenden Batteriemoduls, wobei der Batterieträger (2) mit einem Chassis des Fahrzeugs verbindbar ist, und wobei der Batterieträger (2) ein Batterieträgerbauteil (16) nach einem der vorhergehenden Ansprüche umfasst. Zudem betrifft die vorliegende Erfindung ebenfalls ein Verfahren zur Herstellung eines Batterieträgerbauteils sowie ein Verfahren zu Herstellung eines Batterieträgers.

## Beschreibung

Die vorliegende Erfindung betrifft ein Batterieträgerbauteil, insbesondere einen Batterieträgerrahmen, zur zumindest teilweisen Anordnung in einem Batterieträger und/oder zur Anbindung an einen Batterieträger. Die vorliegende Erfindung betrifft ebenfalls einen Batterieträger zur Aufnahme zumindest einer als Antriebsenergiespeicher für ein elektrisch angetriebenes Fahrzeug dienenden Batteriezelle. Ferner betrifft die vorliegende Erfindung ein Verfahren zur Herstellung eines Batterieträgerbauteils sowie ein Verfahren zur Herstellung eines Batterieträgers.

Elektrisch angetriebene Fahrzeuge der hier in Rede stehenden Art führen in der Regel eine Mehrzahl an Batteriemodulen umfassend Batteriezellen mit sich, die als Antriebsenergiespeicher dienen und die für den Fahrbetrieb benötigte elektrische Energie zur Verfügung stellen. Insbesondere handelt es sich bei einem elektrisch angetriebenen Fahrzeug der hier in Rede stehenden Art um ein Elektroauto, welches im Wesentlichen ausschließlich von einem Elektromotor angetrieben wird. Alternativ kann der vorgenannte Batterieträger auch bei einem Hybrid-Fahrzeug eingesetzt werden, welches zusätzlich zu einem Elektromotor noch einen Verbrennungsmotor aufweist.

Da Batteriezellen/Batteriemodule regelmäßig ein hohes Gewicht aufweisen, stellt ihre Platzierung im Fahrzeug nicht nur aus statischer Sicht hohe Anforderungen an die Tragstruktur des Fahrzeugs, sondern beeinflusst zusätzlich auch die im Fahrbetrieb auftretenden dynamischen Kräfte.

Im Hinblick auf das Fahrverhalten hat sich eine Platzierung der einzelnen Batteriezellen/Batteriemodule im Bodenbereich des Fahrzeugs als vorteilhaft herausgestellt. Um dies zu ermöglichen, werden Batterieträger verwendet, die im Wesentlichen flach und plattenartig ausgebildet sind. Derartige Batterieträger lassen sich im Bodenbereich des Fahrzeugs anordnen und mit dem Chassis des Fahrzeugs verbinden.

An die statische und dynamische Belastbarkeit voranstehend erläuterter Batterieträger werden demnach erhebliche Anforderungen gestellt. So soll der Batterieträger nicht nur in der Lage sein, die einzelnen Batteriezellen bzw. Batteriemodule zu tragen, sondern auch die dynamischen Lasten aufnehmen, die im Fahrbetrieb des Fahrzeugs entstehen. Ebenfalls soll der Batterieträger die aufgenommenen und leicht entzündlichen Batteriezellen bzw. Batteriemodule im Falle eines Unfalls bestmöglich schützen.

Demnach stellen Batterieträger ein für die Sicherheit und Funktionsfähigkeit von Fahrzeugen entscheidendes Bauteil dar. Vorgenannte Anforderungen an die Herstellung von Batterieträgern führen mitunter zur Vorsehung von komplexen Geometrien der Batterieträger. Bedingt durch die komplexen Geometrien der Batterieträger werden häufig Fertigungsverfahren angewendet, bei denen mehrere Bauteile miteinander verbunden, insbesondere miteinander verschweißt, werden müssen. Die hierbei entstehenden Verbindungsstellen können allerdings zu Undichtigkeiten führen, so dass die von dem Batterieträger aufgenommenen Batteriemodule nicht zuverlässig vor dem Eindringen von Flüssigkeit, insbesondere von Wasser, geschützt sind.

In diesem Zusammenhang hat es sich als vorteilhaft erwiesen, eine Rahmenstruktur des Batterieträgers aus zumindest einem tiefgezogenen Bauteil, insbesondere aus zumindest einem tiefgezogenen Blech, zu fertigen. Durch das Tiefziehen kann ein Batterieträger mit nur wenigen Verbindungsstellen zur Verfügung gestellt werden, so dass die Dichtheit des Batterieträgers verbessert werden kann.

Ein solches Fertigungsverfahren ist allerdings dahingehend nachteilig, dass durch den Tiefziehprozess im Wesentlichen senkrecht verlaufende Wände des Batterieträgers kaum herstellbar sind, so dass Randbereiche des Batterieträgers aufgrund des hierdurch bedingten begrenzten Bauraums nicht mit Batteriemodulen oder Batteriezellen bestückt werden können.

Aufgrund des begrenzten Bauraums sind die Grenzen hinsichtlich konstruktiver Optimierungen des entsprechenden Randbereichs zudem schnell erreicht.

Insofern liegt der vorliegenden Erfindung die Aufgabe zugrunde, ein Batterieträgerbauteil sowie einen Batterieträger zur Verfügung zu stellen, mittels welchem der Randbereich des Batterieträgers vorteilhaft genutzt werden kann. Ebenfalls sollen vorteilhafte Herstellungsverfahren für das Batterieträgerbauteil sowie den Batterieträger angegeben werden.

Die vorgenannte Aufgabe wird gemäß einem ersten Aspekt der vorliegenden Erfindung bei einem Batterieträgerbauteil, insbesondere einem Batterieträgerrahmen zur zumindest teilweisen Anordnung in einem Batterieträger und/oder zur Anbindung an einen Batterieträger dadurch gelöst, dass das Batterieträgerbauteil umfasst: zumindest ein Kernelement, wobei das zumindest eine Kernelement ein Metall und/oder Fasermaterial umfasst, insbesondere aus einem Metall und/oder aus einem Fasermaterial besteht, und zumindest ein das Kernelement zumindest teilweise umgebendes Mantelelement, wobei das zumindest eine Mantelelement Kunststoff umfasst, insbesondere aus Kunststoff besteht. Beispielsweise kann es sich bei dem Kunststoff um einen faserverstärkten Kunststoff handeln.

Durch eine derartige hybride Bauweise des Batterieträgerbauteils kann in zuverlässige Weise eine Struktur zu Anordnung in einem Batterieträger und/oder zur Anbindung an einen Batterieträger zur Verfügung gestellt werden, die zu einem Batterieträger mit verbesserten statischen und/oder dynamischen Eigenschaften führt. Insbesondere kann hierdurch beispielsweise die Crush- bzw. die Crashperformance des Batterieträgers insgesamt verbessert werden. Ebenfalls kann durch das Batterieträgerbauteil Füllmaterial in dem Bereich eines Batterieträgers zur Verfügung gestellt werden, in welchem bauraumbedingt keine Batteriezellen angeordnet werden können.

Zudem kann das Batterieträgerbauteil dazu dienen, Anbindungspunkte, beispielsweise sogenannte Sammelschienen, zu fixieren, die wiederum die verschiedenen Pole von Batteriezellen verbinden können. Des Weiteren kann in vorteilhafter Weise das Gesamtgewicht reduziert werden und zugleich die gesamte Performance des Batterieträgerbauteils bzw. des Batterieträgers verbessert werden.

Bei dem zumindest einen Kernelement handelt es sich insbesondere um ein blechförmiges Kernelement, welches vorzugsweise zu einer bestimmten Struktur umgeformt wurde. Insbesondere umfasst das Kernelement eine Stahl- oder eine Aluminiumlegierung.

Bei dem zumindest einen Kernelement kann es sich ebenfalls um ein Fasermaterial, insbesondere um eine Fasermatte handeln, die vorzugsweise zu einer bestimmten Struktur umgeformt wurde. Beispielsweise handelt es sich bei dem Fasermaterial um eine Fasermatte aus Glas- und/oder Kohlefaser.

Es ist ebenfalls denkbar, dass das zumindest eine Kernelement sowohl Metall und auch Fasermaterial umfasst.

Vorzugsweise umgibt das zumindest eine Mantelelement das zumindest eine Kernelement zumindest teilweise. Insofern ist es denkbar, dass eine Seite des Kernelements und/oder ein Teil des Kernelements nicht von dem zumindest einen Mantelelement umgeben ist.

Insbesondere handelt es sich bei dem zumindest einen Mantelelement um ein Spritzgussteil, welches um das zumindest eine Kernelement gespritzt wird. Hierdurch kann das Gesamtgewicht des Batterieträgerbauteils weiter reduziert werden und ein Batterieträgerbauteil in fertigungstechnisch günstiger Weise zur Verfügung gestellt werden.

Eine bevorzugte Ausgestaltung des Batterieträgerbauteils ist dadurch gekennzeichnet, dass das Batterieträgerbauteil dazu ausgebildet ist, einen nicht mit Batteriezellen bestückten Bereich eines Batterieträgers und/oder einen nicht mit Batteriezellen bestückbaren Bereich eines Batterieträgers zu überbrücken. Insbesondere bei der Ausgestaltung einer Rahmenstruktur eines Batterieträgers umfassend zumindest ein tiefgezogenes Blech kann hierdurch andernfalls nicht genutzter Bauraum zur Verbesserung der Performance des Batterieträgers genutzt werden. Es ist bevorzugt, dass die Abmessungen des Batterieträgerbauteils im Wesentlichen dem zu überbrückenden Bauraum der Rahmenstruktur des Batterieträges entsprechen.

Insbesondere weist das zumindest eine Mantelelement zumindest eine sich im Wesentlichen verjüngende Außenkontur und/oder eine sich im Wesentlichen verjüngende Außenseite auf. Hierdurch kann das Batterieträgerbauteil in vorteilhafter Weise einen Randbereich eines Batterieträgers überbrücken, welcher nur einen begrenzten Bauraum aufweist.

Eine weitere bevorzugte Ausgestaltung ist dadurch gekennzeichnet, dass das zumindest eine Mantelelement an seiner Innenkontur, insbesondere an einer zu einem Aufnahmebereich für zumindest eine Batteriezelle und/oder zumindest ein Batteriemodul zeigenden Seite, zumindest eine Aufnahme für zumindest eine Batteriezelle und/oder zumindest ein Batteriemodul aufweist. Auf diese Weise kann die zumindest eine Batteriezelle und/oder das zumindest eine Batteriemodul sicher fixiert und geschützt werden, ohne dass das Anbringen weiterer Elemente im Batterieträgerbauteil notwendig ist. Besonders vorteilhaft hat sich die Vorsehung einer solchen Aufnahme bei der sogenannten "Cell-to-Pack" Technologie herausgestellt, bei welcher die einzelnen Batteriezellen unmittelbar in dem Batterieträger angeordnet sind, ohne dass diese zu einzelnen Batteriemodulen zusammengefasst sind. Beispielsweise können mittels der zumindest einen Aufnahme Batteriezellen, beispielsweise Pouch-Batteriezellen, Rundzellen und/oder prismatische Batteriezellen sicher fixiert werden, so dass keine weiteren Bauteile zur Lagerung der Batteriezellen verwendet werden müssen.

Gemäß einer weiteren Ausführungsform des Batterieträgerbauteils korrespondiert die zumindest eine Aufnahme zu der Außenkontur zumindest einer Batteriezelle, wobei die zumindest eine Aufnahme insbesondere im Wesentlichen kurvenförmig, besonders bevorzugt halbzylindrisch, ausgebildet ist. Hierdurch können die Batteriezellen zuverlässig in dem Batterieträgerbauteil fixiert werden. Dabei wird unter einer im Wesentlichen halbzylindrischen Form eine Form verstanden, die geringe Abweichungen zu einer idealen halbzylindrischen Form aufweist, beispielsweise konstruktions- und fertigungsbedingte Abweichungen. Eine solche Form ist besonders vorteilhaft für die Aufnahme einzelner Batteriezellen. Darüber hinaus sind auch weitere Formen der zumindest einen Aufnahme denkbar und in Abhängigkeit von weiteren möglichen Batterieformen vorteilhaft, beispielsweise eine rechteckige oder dreieckige Form, insbesondere mit abgerundeten Ecken.

Eine weitere vorteilhafte Ausgestaltung ist dadurch gekennzeichnet, dass das zumindest eine Kernelement eine Stahllegierung oder eine Aluminiumlegierung umfasst, insbesondere aus einer Stahllegierung oder aus einer Aluminiumlegierung besteht, und/oder dass das zumindest eine Mantelelement spritzgegossenen Phenolharz und/oder spritzgegossenes Polyamid umfasst, insbesondere aus spritzgegossenem Phenolharz oder aus spritzgegossenem Polyamid besteht. Vorgenannte Materialien des zumindest einen Kernelements und/oder des zumindest einen Mantelelements führen zu einem Batterieträgerbauteil, welches leicht ist und zudem ausreichende Kräfte aufnehmen kann. Beispielsweise weist das spritzgegossene Phenolharz und/oder das spritzgegossene Polyamid eine Faserstruktur auf. Ein Faseranteil des zumindest einen Mantelelements in einem Bereich von 20 bis 40 Gew.-%, insbesondere in einem Bereich von 25 bis 35 Gew.-%, hat sich hinsichtlich der Steifigkeit und des Gewichts des Batterieträgerbauteils als vorteilhaft herausgestellt.

Eine weitere bevorzugte Ausgestaltung ist dadurch gekennzeichnet, dass das Batterieträgerbauteil ferner zumindest ein Mittel zur Anbindung des Batterieträgerbauteils an einen Batterieträger und/oder Mittel zur Anbindung des Batterieträgerbauteils an Batteriemodule und/oder andere Bestandteile der Batterie, wie beispielsweise PCBs, umfasst. Ein Mittel zur Anbindung ist insbesondere ein Mittel, welches dazu genutzt werden kann, Batterieträgerbauteil und Batterieträger bzw. Batterieträgerbauteil und Batterie miteinander zu verbinden. Beispielsweise ist das zumindest eine Mittel zur Anbindung des Batterieträgerbauteils als Durchgangsloch, insbesondere als Durchgangsloch aufweisend ein Innengewinde, als Klebefläche und/oder als Bestandteil einer Clip-Verbindung ausgebildet. Hierdurch können Batterieträgerbauteil und Batterieträger in vorteilhafter Weise mittels einer Klebeverbindung, einer Schraubverbindung, einer Nietverbindung und/oder einer Clipverbindung miteinander verbunden werden.

Eine weitere bevorzugte Ausgestaltung ist dadurch gekennzeichnet, dass sich das zumindest eine Kernelement über im Wesentlichen die gesamte Längsachse des Batterieträgerbauteils erstreckt. Hierdurch kann über die gesamte Länge des Batterieträgerbauteils eine ausreichende Stabilität und Steifigkeit des Batterieträgerbauteils zur Verfügung gestellt werden. Insbesondere sind lediglich die beiden Stirnflächen der Längsseiten des zumindest einen Kernelements mit dem zumindest einen Mantelelement überzogen. Hierbei ist es bevorzugt, dass der an den Stirnflächen des zumindest einen Kernelements angeordnete Überzug eine Dicke von 50 mm, insbesondere eine Dicke von 25 mm, besonders bevorzugt eine Dicke von 10 mm, nicht übersteigt.

Bei einer weiteren bevorzugten Ausgestaltung kann sich das zumindest eine Kernelement nur über einen Teil der Längsachse des Batterieträgerbauteils erstrecken. Hierdurch können kleinere Batterieträgerbauteile gefertigt werden, welche dann hintereinander in den Randbereichen des Batterieträgers angeordnet werden können. Dies ist beispielsweise in fertigungstechnischer Hinsicht vorteilhaft.

Eine weitere bevorzugte Ausgestaltung ist dadurch gekennzeichnet, dass das zumindest eine Kernelement mehrstückig, insbesondere zweiteilig, gefertigt ist. Hierdurch können in fertigungstechnischer Hinsicht Vorteile erlangt werden, da das zumindest eine Mantelelement auf kleineren Maschinen hergestellt werden kann. Eine weitere bevorzugte Ausgestaltung ist dadurch gekennzeichnet, dass das zumindest eine Mantelelement eine im Wesentlichen identische Dicke auf beiden Seiten des zumindest einen Kernelements aufweist. Insbesondere ist das zumindest eine Kernelement im Wesentlichen mittig in dem zumindest einen Mantelelement eingebettet. Dies hat sich hinsichtlich der Aufnahme von Lasten mittels des Batterieträgerbauteils als vorteilhaft herausgestellt.

Eine weitere bevorzugte Ausgestaltung ist dadurch gekennzeichnet, dass das zumindest eine Kernelement an zumindest einer seiner sich in Längsrichtung erstreckenden Kanten Vorsprünge aufweist. Derartige Vorsprünge können insbesondere hinsichtlich der Aufnahme von Kräften von dem zumindest einen Kernelement vorteilhaft sein. Alternativ ist es ebenfalls bevorzugt, dass das zumindest eine Kernelement an zumindest einer seiner sich in Längsrichtung erstreckenden Kanten im Wesentlichen plan ausgestaltet ist. Dies hat sich insbesondere in fertigungstechnischer Hinsicht als vorteilhaft erwiesen.

Eine weitere bevorzugte Ausgestaltung ist dadurch gekennzeichnet, dass das zumindest eine Kernelement ein im Wesentlichen L-förmiges oder ein im Wesentlichen U-förmiges Querschnittsprofil aufweist. Mittels eines vorgenannten Querschnittsprofils kann in vorteilhafter Weise zumindest ein Kernelement zur Verfügung gestellt werden, welches statische und dynamische Lasten zuverlässig aufnimmt.

Hinsichtlich einer ausreichenden Steifigkeit des zumindest einen Kernelements hat es sich weiterhin als vorteilhaft erwiesen, dass das Kernelement zumindest einen Mittelabschnitt mit zwei daran angeformten Schenkeln aufweist. Vorzugsweise verlaufen die Schenkel in einem Winkel von 80° bis 120° zu dem Mittelabschnitt des zumindest einen Kernelements.

Eine weitere vorteilhafte Ausgestaltung ist dadurch gekennzeichnet, dass das zumindest eine Mantelelement das zumindest eine Kernelement im Wesentlichen vollständig umgibt, insbesondere dass das zumindest eine Mantelelement vollständig um das zumindest eine Kernelement gespritzt ist. Hierdurch kann in fertigungstechnisch vorteilhafter Weise ein Batterieträgerbauteil zur Verfügung gestellt werden, welches den zur Verfügung stehenden Bauraum des Batterieträgers überbrückt.

Eine weitere vorteilhafte Ausgestaltung ist dadurch gekennzeichnet, dass das zumindest eine Kernelement Aussparungen, insbesondere Durchgangslöcher, zum formschlüssigen Verbinden mit dem zumindest einen Mantelelement aufweist. Hierdurch kann das Mantelelement in vorteilhafter Weise um das Kernelement umspritzt bzw. an dem Kernelement fixiert werden.

Eine weitere vorteilhafte Ausgestaltung ist dadurch gekennzeichnet, dass das zumindest eine Mantelelement zumindest teilweise eine Profilstruktur zur Versteifung des Batterieträgers aufweist. Vorzugsweise umfasst die Profilstruktur im Wesentlichen horizontal verlaufende Profilstege und/oder im Wesentlichen vertikal verlaufende Profilstege. Dabei bilden die im Wesentlichen horizontal und/oder vertikal verlaufenden Profilstege vorzugsweise im Wesentlichen ein Kastenprofil oder ein Wabenprofil. Durch die Vorsehung einer Profilstruktur können insbesondere Crash-Strukturen geschaffen werden, die etwaige bei einem Unfall des Fahrzeugs entstehende Kräfte aufnehmen und die in dem Batterieträger angeordneten Batteriezellen schützen. Insbesondere die Ausgestaltung der Profilstruktur als Kastenprofil oder Wabenprofil hat sich hinsichtlich einer Fertigung im Spritzgussverfahren sowie hinsichtlich einer hohen Energieabsorption als vorteilhaft gezeigt.

Vorzugsweise variiert die Länge der im Wesentlichen horizontal verlaufenden Profilstege und/oder die Länge der im Wesentlichen vertikal verlaufenden Profilstege zueinander, so dass das zumindest eine Batterieträgerbauteil den zur Verfügung stehenden Bauraum des Batterieträger im Wesentlichen optimal ausnutzen kann. Ebenfalls ermöglicht dies eine angepasste Profilstruktur, so dass das Batterieträgerbauteil bedarfsabhängig stärker oder weniger stark versteift werden kann. Hierdurch lassen sich die Crash-Eigenschaften der Profilstruktur weiter optimieren und das Gesamtgewicht des Batterieträgers reduzieren.

Des Weiteren ist es bevorzugt, dass das zumindest eine Kernelement nur Bestandteil der die Außenseiten des Batterieträgerbauteils bildenden Profilstege ist und die innerhalb dieser Außenseiten angeordneten Profilstege lediglich durch das zumindest eine Mantelelement gebildet werden. Dies führt zu einer Reduktion des Gesamtgewichts des Batterieträgerbauteils.

Vorgenannte Aufgabe wird gemäß einem zweiten Aspekt der vorliegenden Erfindung durch einen Batterieträger zur Aufnahme zumindest einer als Antriebsenergiespeicher für ein elektrisch angetriebenes Fahrzeug dienenden Batteriezelle, wobei der Batterieträger mit einem Chassis des Fahrzeugs verbindbar ist, und wobei der Batterieträger ein vorgenanntes Batterieträgerbauteil umfasst. Somit kann ein Batterieträger zur Verfügung gestellt werden, in welchem der nicht von Batteriezellen und/oder Batteriemodulen ausgefüllte Bauraum in vorteilhafter Weise von dem zumindest einen Batterieträgerbauteil genutzt wird.

Eine weitere vorteilhafte Ausgestaltung ist dadurch gekennzeichnet, dass der Batterieträger zumindest eine im Wesentlichen umlaufende Rahmenstruktur aufweisend Längsseiten, Querseiten sowie einen Bodenbereich zur Bildung eines Aufnahmebereichs für zumindest eine Batteriezelle und/oder zumindest ein Batteriemodul umfasst, wobei die zumindest eine Rahmenstruktur zumindest zwei tiefgezogene Rahmenteile umfasst.

Dabei ist die von dem Aufnahmebereich eingeschlossene Fläche vorzugsweise diejenige Fläche, die im eingebauten Zustand des Batterieträgers in einem Fahrzeug im Wesentlichen horizontal zwischen der umlaufenden Rahmenstruktur verläuft und durch welche demnach zumindest eine Batteriezelle und/oder zumindest ein Batteriemodul aufgenommen werden kann. Insbesondere wird die Fläche des Aufnahmebereichs von der umlaufenden Rahmenstruktur umschlossen, wobei die Fläche des Aufnahmebereichs vorzugsweise durch die inneren Seitenflächen der Längsseiten und durch die inneren Seitenflächen der Querseiten der umlaufenden Rahmenstruktur begrenzt wird und sich demnach insbesondere innerhalb der inneren Seitenflächen der Längsseiten und der Querseiten der Rahmenstruktur erstreckt.

Vorzugsweise ist die umlaufende Rahmenstruktur im Wesentlichen rechteckig gebildet, wobei die Längsseiten jeweils im Wesentlichen parallel zueinander verlaufen und/oder wobei die Querseiten im Wesentlichen parallel zueinander verlaufen.

Indem die zumindest eine Rahmenstruktur zumindest zwei tiefgezogene Rahmenteile, insbesondere zumindest zwei tiefgezogene Bleche, umfasst, kann ein Batterieträger zur Verfügung gestellt werden, welcher aufgrund nur weniger Verbindungsstellen besonders dicht ist und Eindringen von Flüssigkeit daher zuverlässig verhindert werden kann.

Bevorzugt sind die beiden tiefgezogenen Rahmenteile, insbesondere die zumindest zwei tiefgezogenen Bleche miteinander, insbesondere mittels zumindest einer Schweißnaht, verbunden.

Eine weitere bevorzugte Ausgestaltung ist dadurch gekennzeichnet, dass das zumindest eine Batterieträgerbauteil in mindestens einem Randbereich des zumindest einen Batterieträgers zur Überbrückung eines nicht mit Batteriemodulen zu bestückenden Bereichs des Batterieträgers angeordnet und/oder ausgebildet ist. Vorzugsweise ist der mindestens eine Randbereich dadurch gekennzeichnet, dass der Bauraum, insbesondere die Bauhöhe, kleiner als der Bauraum, insbesondere die Bauhöhe, des Aufnahmebereichs für zumindest eine Batteriezelle bzw. zumindest ein Batteriemodul des Batterieträgers ist. Vorzugsweise korrespondiert der mindestens eine Randbereich zu dem Bereich des Batterieträgers in dem die im Wesentlichen tiefgezogenen Seitenwände des Batterieträgers angeordnet sind. Durch eine Anordnung des zumindest einen Batterieträgerbauteils in dem Randbereich kann der andernfalls nicht genutzte Bauraum vorteilhaft genutzt werden und hierdurch die Performance des Batterieträgers hinsichtlich der Crash-Eigenschaften sowie der Aufnahme von Lasten verbessert werden.

Vorgenannte Aufgabe wird gemäß einem dritten Aspekt der vorliegenden Erfindung durch ein Verfahren zur Herstellung eines Batterieträgerbauteils, insbesondere eines vorgenannten Batterieträgerbauteils, gelöst, wobei das Verfahren folgende Schritte umfasst: Bereitstellen zumindest einer Platine, insbesondere einer Metallplatine, zur Herstellung des zumindest einen Kernelements, wobei die zumindest eine Metallplatine insbesondere ein von einem Coil abgetrenntes Metallblech ist; Umformen der zumindest einen Metallplatine zu zumindest einem Kernelement, wobei das zumindest eine Kernelement nach dem Umformen insbesondere ein im Wesentlichen L-förmiges oder ein im Wesentlichen U-förmiges Querschnittsprofil aufweist; und Spritzgießen eines Kunststoffs auf zumindest eine Oberfläche des zumindest einen Kernelements. Hierdurch kann in fertigungstechnischer Weise ein Batterieträgerbauteil zur Verfügung gestellt werden, welches zur Überbrückung von Bauraum innerhalb eines Batterieträgers genutzt werden kann. Weitere Vorteile sowie Merkmale des Verfahrens zur Herstellung eines Batterieträgerbauteils sind bereits im Zusammenhang mit dem Batterieträgerbauteils selbst genannt worden, so dass hinsichtlich dieser auf das Vorstehende verwiesen wird.

Vorgenannte Aufgabe wird gemäß einem vierten Aspekt der vorliegenden Erfindung durch ein Verfahren zur Herstellung eines Batterieträgers, insbesondere eines vorgenannten Batterieträgers, gelöst, wobei das Verfahren folgende Schritte umfasst: Tiefziehen zumindest eines Blechs, insbesondere Tiefziehen von zumindest zwei Blechen, zur Herstellung zumindest einer Rahmenstruktur aufweisend Längsseiten, Querseiten sowie eines Bodenbereich zur Bildung eines Aufnahmebereichs für zumindest eine Batteriezelle und/oder zumindest ein Batteriemodul, Anbinden zumindest eines vorgenannten Batterieträgerbauteils mit der zumindest einen tiefgezogenen Rahmenstruktur zur Überbrückung von nicht mit Batteriemodulen zu bestückenden Bereiche des Batterieträgers. Hierdurch wird die Herstellung eines Batterieträgers in fertigungstechnisch günstiger Weise ermöglicht, wobei der Batterieträger eine vorteilhafte Dichtheit aufweist und zudem eine ausreichende Aufnahme von Lasten ermöglicht. Weitere Vorteile sowie Merkmale des Batterieträgerbauteils sind bereits genannt worden, so dass hinsichtlich dieser auf das Vorstehende verwiesen wird.

Eine bevorzugte Ausgestaltung ist dadurch gekennzeichnet, dass das Verfahren ferner den folgenden Schritt umfasst: Verbinden, insbesondere stoffschlüssiges Verbinden der zumindest zwei tiefgezogenen Bleche zur Herstellung der zumindest einen Rahmenstruktur. Ein solches Verbindungsverfahren ist insbesondere hinsichtlich der Dichtheit des Batterieträgers vorteilhaft. Beispielsweise können die beiden tiefgezogenen Bleche mittels zumindest einer Schweißnaht miteinander verbunden werden.

Weitere Vorteile sowie Merkmale des Verfahrens zur Herstellung eines Batterieträgers sind bereits im Zusammenhang mit dem Batterieträger selbst genannt worden, so dass hinsichtlich dieser auf das Vorstehende verwiesen wird.

Die oben beschriebenen, zunächst grundsätzlich für sich allein stehenden Ausführungsformen und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Nachfolgend wird die Erfindung anhand von Ausführungsbeispielen zeigenden Zeichnungen näher erläutert. Es zeigen jeweils schematisch:
- Fig. 1: eine schematische Ansicht eines Ausführungsbeispiels eines Batterieträgers;
- Fig. 2: eine schematische Ansicht eines Teils eines Ausführungsbeispiels eines Batterieträgerbauteils in einer perspektivischen Ansicht;
- Fig. 3: eine schematische Ansicht des Kernelements des in Fig. 2 gezeigten Ausführungsbeispiels des Batterieträgerbauteils in einer perspektivischen Ansicht;
- Fig. 4a: eine Schnittansicht des in Fig. 2 gezeigten Ausführungsbeispiels des Batterieträgerbauteils in einer perspektivischen Ansicht; und
- Fig. 4b: eine weitere Schnittansicht des in Fig. 2 gezeigten Ausführungsbeispiels des Batterieträgerbauteils in einer Vorderansicht.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

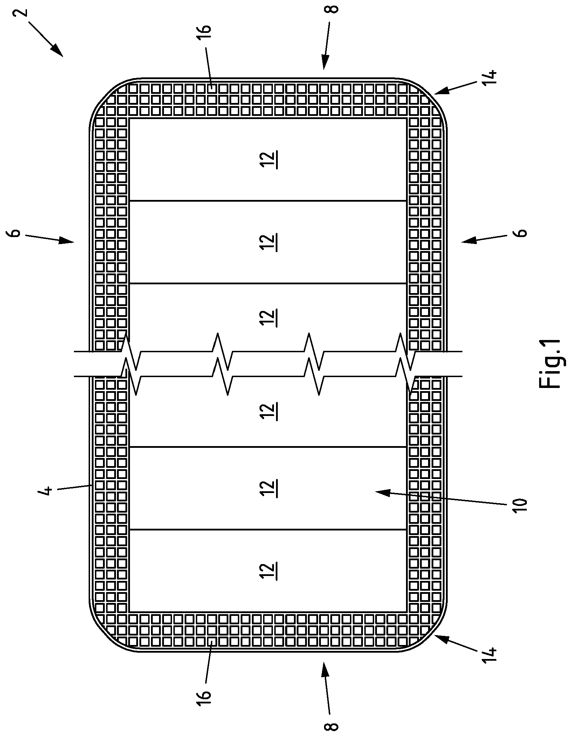

Fig. 1 zeigt eine schematische Schnittansicht eines Ausführungsbeispiels eines Batterieträgers 2. Der Batterieträger 2 weist eine im Wesentlichen umlaufende Rahmenstruktur 4 auf, wobei die Rahmenstruktur 4 Längsseiten 6 sowie Querseiten 8 zur Bildung eines Aufnahmebereichs 10 für Batteriemodule 12 aufweist. Es ist erkennbar, dass durch die im Wesentlichen nicht senkrecht verlaufenden Längsseiten 6 sowie Querseiten 8 Randbereiche 14 vorhanden sind, die aufgrund des begrenzten Bauraums nicht mit Batteriemodulen 12 bestückbar sind.

Beispielsweise kann es sich bei der Rahmenstruktur 4 um ein oder mehrere tiefgezogene Bleche handeln. Für den Fall, dass mehrere, insbesondere zwei, tiefgezogene Bleche zur Bildung einer Rahmenstruktur 4 verwendet werden, können diese mittels einer Schweißnaht (nicht dargestellt) miteinander verbunden sein.

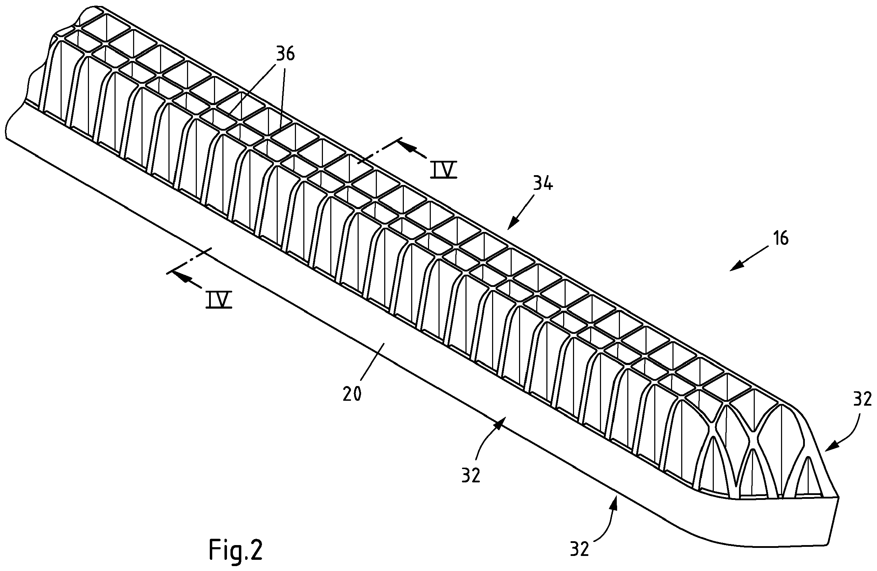

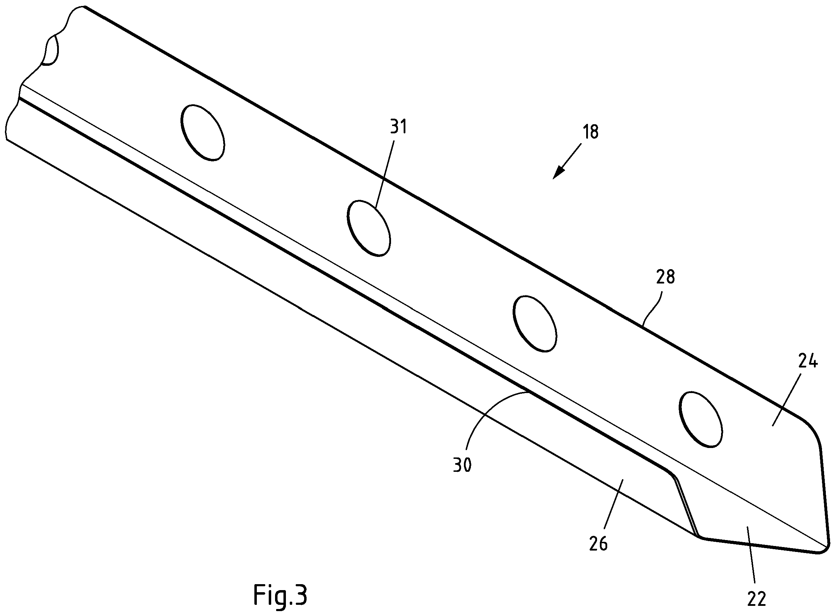

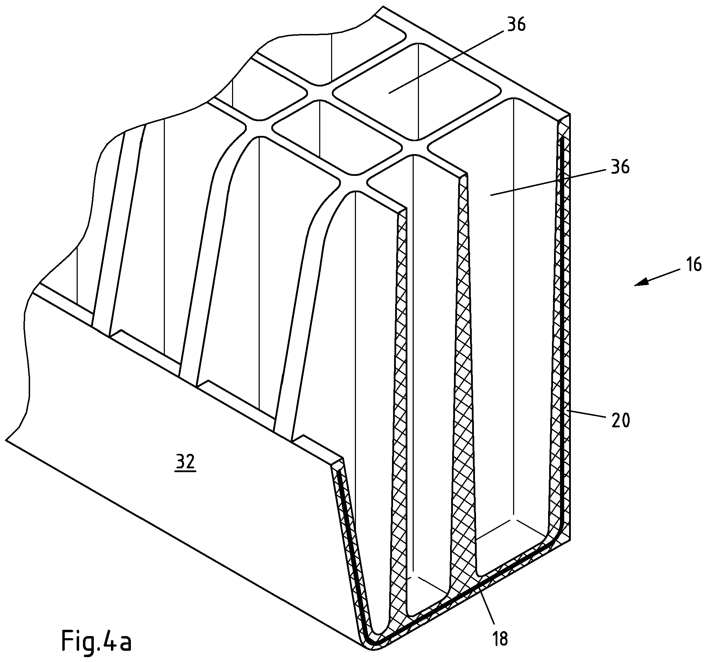

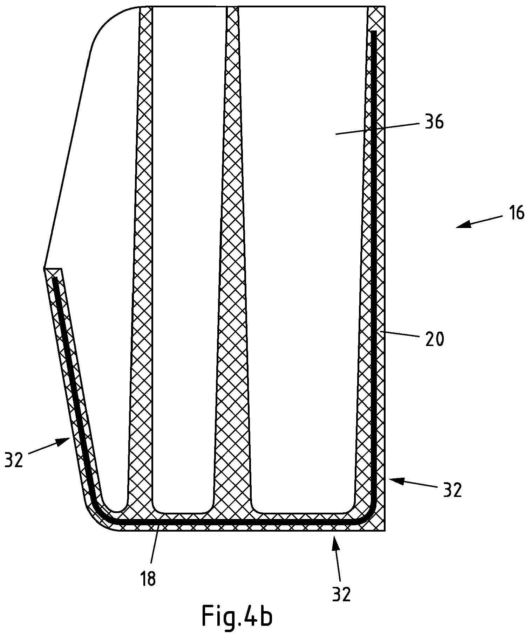

In diesen Randbereichen 14 sind daher Batterieträgerbauteile 16 zur Überbrückung angeordnet. Ein Batterieträgerbauteil 16 ist in den Fig. 2 bis 4b im Detail dargestellt.

Das Batterieträgerbauteil 16 weist ein Kernelement 18 sowie ein Mantelelement 20 auf. Das Kernelement ist insbesondere aus Metall oder aus Kunststoff gefertigt. Beispielsweise kann das Kernelement aus einer Stahllegierung oder aus einer Aluminiumlegierung bestehen.

Es ist erkennbar, dass sich das Kernelement 18 über im Wesentlichen die gesamte Länge bzw. die gesamte Längsachse des Batterieträgerbauteils 16 erstreckt.

Ferner weist das Kernelement ein im Wesentlichen L-förmiges Querschnittsprofil mit einem Mittelabschnitt 22 sowie zwei an dem Mittelabschnitt 22 angeformten Schenkeln 24 und 26 auf. Der Schenkel 24 weist im Wesentlichen dieselbe Breite wie der Mittelabschnitt 22 auf und erstreckt sich im Wesentlichen orthogonal zu dem Mittelabschnitt. Der Schenkel 26 weist in etwa die halbe Breite des Mittelabschnitts 22 auf und erstreckt sich in Längsrichtung des Batterieträgerbauteils 16 im Wesentlichen in einem Winkel zwischen 100° und 130° zu dem Mittelabschnitt 22.

Ferner sind die sich im Wesentlichen in Längsrichtung erstreckenden Kanten 28 und 30 der beiden Schenkel 24 und 26 im Wesentlichen plan und weisen keine Vorsprünge auf.

Des Weiteren sind Aussparungen in Form von Durchgangslöchern 31 in dem Schenkel 28 vorgesehen, welche die formschlüssige Anbindung zwischen Kernelement 18 und Mantelelement 20 weiter verbessern können.

Es ist erkennbar, dass das Mantelelement 20 das Kernelement 18 im Wesentlichen vollständig umgibt. Das Mantelelement ist vorzugsweise aus einem spritzgegossenen Kunststoff gefertigt, wobei der Kunststoff ebenfalls faserverstärkt sein kann. Beispielsweise kann es sich um spritzgegossenes Phenolharz oder um spritzgegossenes Polyamid handeln.

Mittels des Mantelelements 20 werden ferner Mittel zur Anbindung, nämlich eine Klebefläche 32 zur Verfügung gestellt, mittels welcher das Batterieträgerbauteil 16 mit dem Batterieträger 2 verbunden werden kann.

Das Mantelelement 20 weist ferner eine Profilstruktur 34 zur Versteifung des Batterieträgerbauteils 16 auf. Es ist erkennbar, dass die Profilstruktur 34 ein Kastenprofil bildet. Die Profilstruktur 34 setzt sich aus im Wesentlichen vertikal verlaufenden Profilstegen 36 zusammen, wobei die Profilstege 36 zueinander im Wesentlichen orthogonal verlaufen, um ein Kastenprofil zu bilden. Zudem sind die an der Querseite 8 des Batterieträgers 2 angeordneten Profilstege 36 abgeschrägt, so dass die Außenkontur des Batterieträgerbauteils 16 zu der Innenkontur der Randbereiche 14 des Batterieträgers 2 korrespondiert.

Die in dieser Spezifikation beschriebenen beispielhaften Ausführungsformen/Ausführungsbeispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugszeichenliste

- 2: Batterieträger
- 4: Rahmenstruktur
- 6: Längsseite der Rahmenstruktur
- 8: Querseite der Rahmenstruktur
- 10: Aufnahmebereich
- 12: Batteriemodul
- 14: Randbereich
- 16: Batterieträgerbauteil
- 18: Kernelement
- 20: Mantelelement
- 22: Mittelabschnitt des Kernelements
- 24: Schenkel des Kernelements
- 26: Schenkel des Kernelements
- 28: Kante des Schenkels 24
- 30: Kante des Schenkels 26
- 31: Aussparung
- 32: Klebefläche
- 34: Profilstruktur
- 36: Profilsteg

## Patentansprüche

1. Batterieträgerbauteil, insbesondere Batterieträgerrahmen, zur zumindest teilweisen Anordnung in einem Batterieträger (2) und/oder zur Anbindung an einen Batterieträger (2), umfassend:
- zumindest ein Kernelement (18), wobei das zumindest eine Kernelement (18) ein Metall und/oder Fasermaterial umfasst, insbesondere aus einem Metall und/oder aus einem Fasermaterial besteht, und
- zumindest ein das Kernelement (18) zumindest teilweise umgebendes Mantelelement (20), wobei das zumindest eine Mantelelement (20) Kunststoff umfasst, insbesondere aus Kunststoff besteht.

2. Batterieträgerbauteil nach Anspruch 1,
- wobei das Batterieträgerbauteil (16) dazu ausgebildet ist, einen nicht mit Batteriezellen bestückten Bereich (14) eines Batterieträgers (2) und/oder einen nicht mit Batteriezellen bestückbaren Bereich (14) eines Batterieträgers (2) zu überbrücken.

3. Batterieträgerbauteil nach Anspruch 1 oder 2,
- wobei das zumindest eine Kernelement (18) eine Stahllegierung oder eine Aluminiumlegierung umfasst, insbesondere aus einer Stahllegierung oder aus einer Aluminiumlegierung besteht, und/oder
- wobei das zumindest eine Mantelelement (20) spritzgegossenen Phenolharz oder spritzgegossenes Polyamid umfasst, insbesondere aus spritzgegossenem Phenolharz oder aus spritzgegossenem Polyamid besteht.

4. Batterieträgerbauteil nach einem der Ansprüche 1 bis 3,
- wobei das Batterieträgerbauteil (16) ferner zumindest ein Mittel zur Anbindung (32) des Batterieträgerbauteils (16) an einen Batterieträger (2) und/oder Mittel zur Anbindung des Batterieträgerbauteils (16) an Batteriemodule und/oder andere Bestandteile der Batterie umfasst und
- wobei das zumindest eine Mittel zur Anbindung (32) des Batterieträgerbauteils (16) vorzugsweise als Durchgangsloch, insbesondere als Durchgangsloch aufweisend ein Innengewinde, als Klebefläche (32) und/oder als Bestandteil einer Clip-Verbindung ausgebildet ist.

5. Batterieträgerbauteil nach einem der Ansprüche 1 bis 4,
- wobei sich das zumindest eine Kernelement (18) über im Wesentlichen die gesamte Längsachse des Batterieträgerbauteils (16) erstreckt und/oder
- wobei das zumindest eine Kernelement (18) an zumindest einer seiner sich in Längsrichtung erstreckenden Kanten (28, 30) Vorsprünge aufweist und/oder,
- wobei das zumindest eine Kernelement (18) Aussparungen (31), insbesondere Durchgangslöcher, zum formschlüssigen Verbinden mit dem zumindest einen Mantelelement (20) aufweist.

6. Batterieträgerbauteil nach einem der Ansprüche 1 bis 5,
- wobei das zumindest eine Kernelement (18) ein im Wesentlichen L-förmiges oder ein im Wesentlichen U-förmiges Querschnittsprofil aufweist.

7. Batterieträgerbauteil nach einem der Ansprüche 1 bis 6,
- wobei das zumindest eine Mantelelement (20) das zumindest eine Kernelement (18) im Wesentlichen vollständig umgibt.

8. Batterieträgerbauteil nach einem der Ansprüche 1 bis 7,
- wobei das zumindest eine Mantelelement (20) zumindest teilweise eine Profilstruktur (34) zur Versteifung des Batterieträgerbauteils (16) aufweist,
- wobei die Profilstruktur (34) insbesondere im Wesentlichen horizontal verlaufende Profilstege (36) und/oder im Wesentlichen vertikal verlaufende Profilstege (36) umfasst, und
- wobei vorzugweise die im Wesentlichen horizontal und/oder vertikal verlaufenden Profilstege (36) im Wesentlichen ein Kastenprofil oder ein Wabenprofil bilden.

9. Batterieträgerbauteil nach einem der Ansprüche 1 bis 8,
- wobei das zumindest eine Mantelelement (20) an seiner Innenkontur, insbesondere an einer zu einem Aufnahmebereich (10) für zumindest eine Batteriezelle und/oder zumindest ein Batteriemodul (12) zeigenden Seite, zumindest eine Aufnahme für zumindest eine Batteriezelle und/oder zumindest ein Batteriemodul (12) aufweist,
- wobei die zumindest eine Aufnahme insbesondere zu der Außenkontur zumindest einer Batteriezelle und/oder zumindest einen Batteriemoduls korrespondiert, und
- wobei die zumindest eine Aufnahme vorzugsweise im Wesentlichen kurvenförmig, besonders bevorzugt halbzylindrisch, ausgebildet ist.

10. Batterieträger zur Aufnahme zumindest einer als Antriebsenergiespeicher für ein elektrisch angetriebenes Fahrzeug dienenden Batteriezelle,
- wobei der Batterieträger (2) mit einem Chassis des Fahrzeugs verbindbar ist, und
- wobei der Batterieträger (2) ein Batterieträgerbauteil (16) nach einem der vorhergehenden Ansprüche umfasst.

11. Batterieträger nach Anspruch 10,
- wobei der Batterieträger (2) zumindest eine im Wesentlichen umlaufende Rahmenstruktur (4) aufweisend Längsseiten (6), Querseiten (8) sowie einen Bodenbereich zur Bildung eines Aufnahmebereichs für zumindest eine Batteriezelle und/oder zumindest ein Batteriemodul (12) umfasst,
- wobei die zumindest eine Rahmenstruktur insbesondere zumindest zwei tiefgezogene Rahmenteile umfasst.

12. Batterieträger nach Anspruch 10 oder 11,
- wobei das zumindest eine Batterieträgerbauteil (16) in einem Randbereich (14) des zumindest einen Batterieträgers (2) zur Überbrückung eines nicht mit Batteriezellen und/oder mit Batteriemodulen (12) zu bestückenden Bereichs (14) des Batterieträgers (2) angeordnet ist.

13. Verfahren zur Herstellung eines Batterieträgerbauteils, insbesondere eines Batterieträgerbauteils nach einem der Ansprüche 1 bis 9, umfassend die Schritte:
- Bereitstellen zumindest eines Kernelements, wobei das zumindest eine Kernelement insbesondere eine von einem Coil abgetrennte Metallplatine ist;
- Umformen des zumindest einen Kernelements, wobei das zumindest eine Kernelement nach dem Umformen insbesondere ein im Wesentlichen L-förmiges oder ein im Wesentlichen U-förmiges Querschnittsprofil aufweist; und
- Spritzgießen eines Kunststoffs auf zumindest eine Oberfläche des zumindest einen Kernelements.

14. Verfahren zur Herstellung eines Batterieträgers, insbesondere eines Batterieträgers nach einem der Ansprüche 10 bis 12, umfassend die Schritte:
- Tiefziehen zumindest eines Blechs, insbesondere Tiefziehen von zumindest zwei Blechen, zur Herstellung zumindest einer Rahmenstruktur aufweisend Längsseiten, Querseiten sowie eines Bodenbereich zur Bildung eines Aufnahmebereichs für zumindest eine Batteriezelle und/oder zumindest ein Batteriemodul,
- Anbinden zumindest eines Batterieträgerbauteils nach einem der Ansprüche 1 bis 8 mit der zumindest einen tiefgezogenen Rahmenstruktur zur Überbrückung von nicht mit Batteriemodulen zu bestückenden Bereichs des Batterieträgers.

15. Verfahren nach Anspruch 14, wobei das Verfahren ferner folgenden Schritt umfasst:
- Verbinden, insbesondere stoffschlüssiges Verbinden der zumindest zwei tiefgezogenen Bleche zur Herstellung der zumindest einen Rahmenstruktur.
